# EUROPÄISCHE PATENTSCHRIFT

(11) **EP 2 084 606 B1**
(45) Veröffentlichungstag und Bekanntmachung des Hinweises auf die Patenterteilung: **14.11.2012**
(21) Anmeldenummer: 07820344.5
(22) Anmeldetag: 19.09.2007
(51) Int. Cl.: G06F 9/48

(54) **VERFAHREN ZUM UMSCHALTEN EINES SYSTEMS MIT MEHREREN AUSFÜHRUNGSEINHEITEN**
METHOD FOR CHANGING OVER A SYSTEM HAVING A PLURALITY OF EXECUTION UNITS
PROCÉDÉ POUR PERMUTER UN SYSTÈME COMPRENANT PLUSIEURS UNITÉS D'EXÉCUTION

(30) Priorität: 10.10.2006 DE 102006048173
(43) Veröffentlichungstag der Anmeldung: 05.08.2009
(73) Patentinhaber: Robert Bosch GmbH, 70442 Stuttgart (DE)
(72) Erfinder: FERCH, Markus, 71723 Grossbottwar (DE); COLLANI, Yorck, 71717 Beilstein (DE)
(86) Internationale Anmeldenummer: PCT/EP2007/059900
(87) Internationale Veröffentlichungsnummer: WO 2008/043649

(56) Entgegenhaltungen:
- DE-A1- 10 332 700
- US-B1- 6 205 565
- US-B1- 6 640 313

## Beschreibung

Die Erfindung betrifft ein System mit mehreren Ausführungseinheiten und ein Verfahren zu dessen Umschaltung, wobei das System mit mehreren Ausführungseinheiten mindestens zwei Ausführungseinheiten aufweist, die zwischen einem Performanz-Betriebsmodus, bei dem die Ausführungseinheiten unterschiedliche Programme ausführen, und einem Vergleichs-Betriebsmodus, bei dem die Ausführungseinheiten das gleiche Programm ausführen, umschaltbar sind.

Bei eingebetteten Systemen (Embedded System), insbesondere in der Automobiltechnik oder Automatisierungstechnik, gibt es Anwendungen bzw. Anwendungsprogramme, bei denen ein Fehler in der Hardware des Prozessors bzw. der Mikrocontroller-Hardware fatale Konsequenzen haben kann. Um diese Gefahr zu verringern, werden Überwachungsmaßnahmen eingesetzt, um Fehler zu detektierten. Bei manchen Anwendungen bzw. Anwendungsprogrammen ist eine derartige Überwachung nahezu permanent notwendig, während bei anderen Anwendungen eine Überwachungsfunktion regelmäßig, beispielsweise periodisch, oder auf eine bestimmte Anforderung, beispielsweise in Folge eines Interrupts, überwacht, ob das Prozessorsystem oder auch andere Komponenten noch korrekt funktionieren.

Aus der US 6640313 B1 ist bereits ein Rechnersystem bekannt, bei dem verschiedene Ausführungseinheiten in einem Vergleichsmodus oder einem Performanzmodus betreibbar sind. Die DE 103 32 700 beschreibt ein Verfahren zur Umschaltung zwischen mindestens zwei Betriebsmodi einer Prozessoreinheit Die dort beschriebene Prozessoreinheit weist zwei Ausführungseinheiten auf. Eine derartige Rechnerarchitektur wird auch als Dual-Core-Rechnerarchitektur bezeichnet Das in der DE 103 32 700 beschriebene Prozessorsystem ist zwischen einem Performanz-Betriebsmodus und einem Vergleichs-Betriebsmodus umschaltbar. In dem Performanz-Betriebsmodus führen die Ausführungseinheiten gleichzeitig unterschiedliche Programme aus, um die Performanz- bzw. die Rechnerleistung zu steigern. Im Gegensatz zum Performanz-Betriebsmodus PM führen im Vergleichs-Betriebsmodus VM die Ausführungseinheiten identische Programme aus und das Ergebnis bzw. die von den Ausführungseinheiten abgegebenen Signale werden miteinander verglichen. Ergibt der Vergleich eine Abweichung zwischen den Signalen, löst dies anschließend ein Fehlersignal aus.

Der Vergleichs-Betriebsmodus VM wird insbesondere bei sicherheitskritischen Programmen eingesetzt, um die Sicherheit zu erhöhen. Grundsätzlich ist es, um die Rechnerleistung zu steigern, sinnvoll, möglichst viele Anwendungen bzw. Programme in einem möglichst leistungsfähigen Modus, d. h. in dem Performanz-Betriebsmodus PM, ablaufen zu lassen. Andererseits müssen bei sicherheitskritischen Anwendungen fast alle Aufgaben bzw. Programme mit hoher Fehlererkennung berechnet werden. d. h. im Vergleichs-Betriebsmodus VM.

Die Umschaltung zwischen dem Performanz-Betriebsmodus PM und dem Vergleichs-Betriebsmodus VM übernimmt ein Betriebssystem BS. Das Betriebssystem BS entscheidet anhand einer programmspezifischen Kennung, in welchem Betriebsmodus der Programmcode ausgeführt werden soll. Diese Kennung kann sowohl statisch als auch dynamisch zugewiesen werden. Es besteht auch die Möglichkeit, dass ein Programm einem bestimmten Betriebsmodus fest zugeordnet ist.

Auf einem System mit mehreren Ausführungseinheiten können mehrere Programme gleichzeitig abgearbeitet werden. Welche Programme tatsächlich zur Ausführung gelangen entscheidet ein so genannter Scheduler, der einen. Teil des Betriebssystems BS bildet. In einem System mit mehreren Ausführungseinheiten wird der Scheduler auf jeder Ausführungseinheit separat ausgeführt. Es existieren also mehrere Scheduler bzw. Betriebssysteminstanzen. Dabei arbeiten die Instanzen größtenteils auf Basis derselben Daten. Ein laufendes Programm wird außer von dem Scheduler unter Umständen auch von einem so genannten Interrupt-Service-Routine ISR unterbrochen. Dabei ist jede Interrupt-Service-Routine ISR einem bestimmten Ereignis zugeordnet. Tritt dieses Ereignis ein, wird das gerade laufende Programm unterbrochen und die zugehörigen Interrupt-Service-Routine ISR ausgeführt. Jeder Interrupt-Service-Routine ISR weist eine Kennung auf, welche den zugehörigen Betriebsmodus festlegt, in dem die Interrupt-Service-Routine auszuführen ist.

Bei einem System mit mehreren Ausführungseinheiten, das zwischen einem Performanz-Betriebsmodus PM und einem Vergleichs-Betriebsmodus VM umschaltbar ist, ist es notwendig, den erforderlichen Betriebsmoduswechsel zuverlässig zu erkennen und zu initiieren. Dieser Vorgang selbst kostet ebenfalls Rechenzeit bzw. Rechenleistung und kann nicht zu jedem Zeitpunkt abgebrochen werden. Wird von einer Betriebssysteminstanz festgestellt, dass ein Moduswechsel in den Vergleichs-Betriebsmodus VM erforderlich ist, kann nicht sofort eine Umschaltung erfolgen. Nur für den Fall, dass auf den weiteren Ausführungseinheiten bzw. Cores Programme mit einer niedrigeren Priorität ausgeführt werden, kann dem jeweiligen Programm die Ausführungseinheit zur Umschaltung in den Vergleichs-Betriebsmodus VM entzogen werden. Dabei wird die Ermittlung der Priorität von Programmen auf den übrigen Ausführungseinheiten dadurch erschwert, dass in einem System mit mehreren Ausführungseinheiten alle aktiven Programme bzw. Interrupt-Service-Routinen sowie die Programme des Betriebssystems selbst tatsächlich gleichzeitig abgearbeitet werden. Im Gegensatz dazu werden bei einem herkömmlichen Einprozessorsystem Programme nacheinander durch die einzige Ausführungseinheit abgearbeitet.

Bei einem System mit mehreren Ausführungseinheiten besteht die Gefahr, dass eine Betriebssysteminstanz, beispielsweise eine Instanz des Schedulers, einen Betriebsmoduswechsel veranlasst bzw. vornimmt während die auf den anderen Ausführungseinheiten laufenden Betriebssysteminstanzen in dem bisherigen Betriebsmodus verbleiben. Da für einen Betriebsmoduswechsel bei einem System insbesondere bei einem Wechsel in den Vergleichs-Betriebsmodus VM mindestens zwei Ausführungseinheiten benötigt werden, kann daher die betroffene Ausführungseinheit für eine bestimmte Zeit blockiert werden.

Ein einfaches Beispiel soll dies erläutern. Hierbei umfasst die Gesamtheit der Programme beispielsweise vier Tasks T1, T2, T3, T4 mit den entsprechenden Prioritäten, d. h. T1 hat die höchste Priorität "Prio 3", T2 hat die zweithöchste Priorität "Prio 2", T3 hat die dritthöchste Priorität "Prio 1" und die letzte Task T4 hat die niedrigste Priorität "Prio 0" und die Tasks T1 bis T4 sind derart gekennzeichnet, dass die Tasks T1, T2 im Performanz-Betriebsmodus PM auszuführen sind, während die Tasks T3, T4 im Vergleichs-Betriebsmodus VM auszuführen sind. Das System mit mehreren Ausführungseinheiten weist beispielsweise zwei Ausführungseinheiten bzw. CPU auf. Führt die erste Ausführungseinheit CPU1 im Performanz-Betriebsmodus PM zunächst die prioritätshöchste Task T1 aus und die andere Ausführungseinheit bzw. CPU die Task T2 mit der zweithöchsten Priorität. So wird sobald die Task T1 beendet ist, das Betriebssystem BS durch die erste Ausführungseinheit CPU1 aufgerufen und der Scheduler entscheidet, welche Task T als nächstes ausgeführt werden soll. In dem gegebenen Beispiel entscheidet sich der Scheduler für die Task T3, da diese die nächst höhere Priorität "Prio 1" aufweist. Diese Task T3 hat jedoch ein Attribut bzw. eine Kennzeichnung, die angibt, dass diese Task T3 im Vergleichs-Betriebsmodus VM ausgeführt werden soll. Somit ist das System mit mehreren Ausführungseinheiten in einen Vergleichs-Betriebsmodus VM umzuschalten. Auf der zweiten Ausführungseinheit CPU2 läuft noch die Task T2. Der Scheduler wartet daher, bis die Task T2 auf der CPU2 beendet ist. Sobald die Task T2 auf der CPU2 beendet ist, schaltet dann der Scheduler bzw. das Betriebssystem BS beide Ausführungseinheiten in den Vergleichs-Betriebmodus VM und startet die Task T3. In diesem Fall entsteht kein Konflikt. Weist allerdings in einem weiteren Beispiel die Task T2 eine niedrigere Priorität als die Task T3 auf, beispielsweise, wenn die Task T2 eine "Prio 1" aufweist, während die Task T3 eine "Priorität 2" aufweist, müssten in einem gegebenen Szenario das Betriebssystem BS nach Beendigung der Task T1, die auf der CPU1 ausgeführt worden ist, die noch auf der CPU2 laufende Task T2 sofort unterbrechen und auf beiden Ausführungseinheiten die Task T3 ablaufen lassen. Das Betriebssystem BS muss allerdings selbst auf einer Ausführungseinheit ausgeführt werden. In dem gegebenen Beispiel wird das Betriebssystem BS auf der freigewordenen ersten Ausführungseinheit CPU1 ausgeführt und möchte die Task T3 starten. Hierzu muss das Betriebssystem feststellen, welche die Priorität die gerade auf der Ausführungseinheit CPU2 laufende Task T2 hat. Der Vergleich der Prioritäten der Tasks T2 und T3 auf der ersten Ausführungseinheit CPU1 benötigt allerdings gewisse Zeit. Während der für den Prioritätsvergleich benötigten Zeitspanne bzw. Zeitdauer kann jedoch der Fall auftreten, dass die zweite Ausführungseinheit CPU2 die Task T2 beendet und seinerseits das Betriebssystem bzw. den Scheduler aufruft. In dem gegebenen Beispiel würde die zweite Ausführungseinheit die verbleibende Task T4 aufrufen, die im Vergleichs-Betriebsmodus VM auszuführen ist, und es käme zu einer Kollision zwischen den Tasks T3 und T4, die beide die erste und zweite Ausführungseinheit CPU1, CPU2 benötigen. Die aufgetretene Kollision kann immer auftreten, wenn eine aufgerufene Task T in einem Vergleichs-Betriebsmodus VM abzulaufen hat.

Es ist daher die Aufgabe der vorliegenden Erfindung, ein System mit mehreren Ausführungseinheiten sowie ein Verfahren zu dessen Umschaltung zu schaffen, bei der Kollisionen beim Umschalten in einen Vergleichs-Betriebsmodus vermieden werden.

Diese Aufgabe wird erfindungsgemäß durch ein Verfahren mit den im Patentanspruch 1 angegebenen Merkmalen sowie durch ein System mit mehreren Ausführungseinheiten mit den im Patentanspruch 11 angegebenen Merkmalen gelöst.

Die Erfindung schafft ein Verfahren zum Umschalten eines Systems mit mehreren Ausführungseinheiten, das mindestens zwei Ausführungseinheiten aufweist, von einem Performanz-Betriebsmodus PM, in welchem die Ausführungseinheiten unterschiedliche Programme ausführen, in einen Vergleichs-Betriebsmodus VM, in welchem die Ausführungseinheiten das gleiche Programm ausführen, mit den folgenden Schritten, nämlich
- Aufrufen eines Schedulers durch eine Ausführungseinheit, wobei der aufgerufene Scheduler das nächste auszuführende Programm ermittelt,
- Veranlassen der übrigen Ausführungseinheiten dazu, den Scheduler ebenfalls aufzurufen, wenn das nächste auszuführende Programm in dem Vergleichs-Betriebsmodus VM auszuführen ist, und
- Umschalten des Systems mit mehreren Ausführungseinheiten von dem Performanz-Betriebsmodus PM in den Vergleichs-Betriebsmodus VM, wenn das von dem zuletzt aufgerufenen Scheduler ermittelte auszuführende Programm in dem Vergleichs-Betriebsmodus VM durchzuführen ist, wobei dieses von dem zuletzt aufgerufenen Scheduler ermittelte auszuführende Programm als Programm mit der höchsten Priorität durch alle Ausführungseinheiten in dem Vergleichs-Betriebsmodus VM des Systems mit mehreren Ausführungseinheiten ausgeführt wird.

Bei einer bevorzugten Ausführungsform des erfindungsgemäßen Verfahrens wartet diejenige Ausführungseinheit, die den Scheduler zuerst zur Ermittlung des als nächstes auszuführenden Programms aufruft, bis alle übrigen Ausführungseinheiten durch den Aufruf des Schedulers ebenfalls ein als nächstes auszuführendes Programm ermittelt haben, und erst dann wird geprüft, ob das von dem zuletzt aufgerufenen Scheduler ermittelte Programm, welches das Programm mit der höchsten Priorität bildet, in einem Vergleichs-Betriebsmodus VM auszuführen ist.

Bei einer Ausführungsform des erfindungsgemäßen Verfahrens ruft diejenige Ausführungseinheit, welchen den Scheduler zuerst aufgerufen hat, den Scheduler erneut auf, wenn das von dem zuletzt aufgerufenen Scheduler ermittelte Programm nicht in dem Vergleichs-Betriebsmodus VM durchzuführen ist.

Bei einer Ausführungsform des erfindungsgemäßen Verfahrens wird das auszuführende Programm direkt ohne Umschalten ausgeführt, wenn der aufgerufene Scheduler ein Programm als nächstes auszuführendes Programm ermittelt, das nicht in einem Vergleichs-Betriebsmodus VM, sondern in einem Performanz-Betriebsmodus PM auszuführen ist.

Bei einer Ausführungsform des erfindungsgemäßen Verfahrens vergleicht eine Ausführungseinheit, die den Scheduler zur Ermittlung des nächsten auszuführenden Programms aufruft, die Priorität des ermittelten Programms mit den Prioritäten aller gerade auf den anderen Ausführungseinheiten ausgeführten Programmen, falls das ermittelte Programm in einem Vergleichs-Betriebsmodus VM auszuführen ist.

Bei einer Ausführungsform des erfindungsgemäßen Verfahrens geht diejenige Ausführungseinheit, die den Scheduler zuerst aufgerufen hat, in einen Leerlauf-Betriebsmodus (IDLE) über und wartet, bis die übrigen Ausführungseinheiten ihre Programme jeweils beendet haben, wenn ein gerade auf einer anderen Ausführungseinheit durchgeführtes Programm eine höhere Priorität aufweist als das durch den zuerst aufgerufenen Scheduler ermittelte, als nächstes auszuführende Programm.

Bei einer Ausführungsform des erfindungsgemäßen Verfahrens veranlasst diejenige Ausführungseinheit, die den Scheduler zur Ermittlung des nächsten auszuführenden Programms aufruft, die anderen Ausführungseinheiten dazu, ebenfalls den Scheduler aufzurufen, indem sie den anderen Ausführungseinheiten ein Aufforderungssignal sendet, wenn das nächste auszuführende Programm in einem Vergleichs-Betriebsmodus VM auszuführen ist.

Bei einer Ausführungsform des erfindungsgemäßen Verfahrens wird das Aufforderungssignal durch ein Interrupt-Signal gebildet.

Bei einer Ausführungsform des erfindungsgemäßen Verfahrens werden die Ausführungseinheiten jeweils durch einen Prozessor, einen Co-Prozessor, eine Gleitpunktberechnungseinheit, eine arithmetisch logische Einheit oder durch einen digitalen Signalprozessor gebildet.

Bei einer möglichen Ausführungsform des erfindungsgemäßen Verfahrens ruft eine Ausführungseinheit nach Beendigung eines ausgeführten Programms den Scheduler auf.

Die Erfindung schafft ferner ein System mit mindestens zwei Ausführungseinheiten, das zwischen einem Performanz-Betriebsmodus PM, bei dem die Ausführungseinheiten unterschiedliche Programme ausführen, und einem Vergleichs-Betriebsmodus VM, bei dem die Ausführungseinheiten das gleiche Programm ausführen, umschaltbar ist, mit
- einem Scheduler, der durch eine Ausführungseinheit zum Ermitteln des nächsten auszuführende Programms aufgerufen wird,
   wobei die übrigen Ausführungseinheiten dazu veranlasst werden, ebenfalls den Scheduler aufzurufen, wenn das durch den zuerst aufgerufenen Scheduler ermittelte Programm in dem Vergleichs-Betriebsmodus VM auszuführen ist, und mit
- einer Umschalteinheit, die das System mit mehreren Ausführungseinheiten von dem Performanz-Betriebsmodus PM in den Vergleichs-Betriebsmodus VM umschaltet, wenn das von dem zuletzt aufgerufenen Scheduler ermittelte auszuführende Programm in dem Vergleichs-Betriebsmodus VM auszuführen ist,
   wobei dieses ermittelte auszuführende Programm als Programm mit der höchsten Priorität durch alle Ausführungseinheiten nach dem Umschalten des Systems mit mehreren Ausführungseinheiten in dem Vergleichs-Betriebsmodus VM ausgeführt wird.

Im Weiteren werden bevorzugte Ausführungsformen des erfindungsgemäßen Systems mit mehreren Ausführungseinheiten sowie des erfindungsgemäßen Verfahrens zu dessen Umschaltung unter Bezugnahme auf die beigefügten Figuren zur Erläuterung erfindungswesentlicher Merkmale beschrieben.

Es zeigen:
- Figur 1: eine mögliche Ausführungsform des erfindungsgemäßen Systems mit mehreren Ausführungseinheiten;
- Figur 2A: ein Ablaufdiagramm zur Erläuterung des erfindungsgemäßen Umschaltverfahrens;
- Figur 2B: ein weiteres Ablaufdiagramm zur Erläuterung des erfindungsgemäßen Umschaltverfahrens.

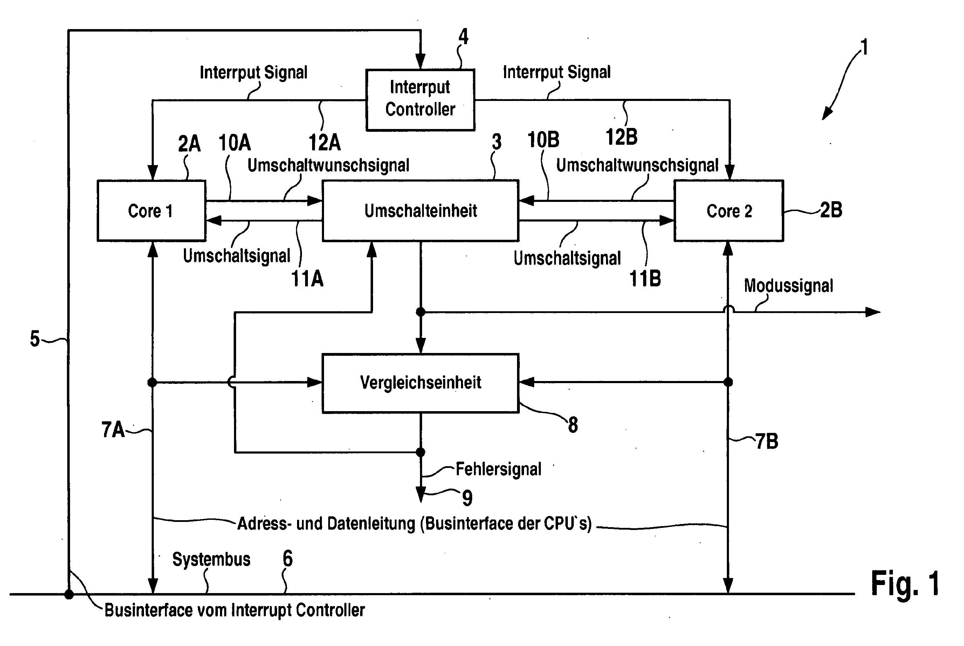

Wie man aus Figur 1 erkennen kann, handelt es sich bei dem in Figur 1 dargestellten System 1 um ein Dual-Core-System mit zwei Ausführungseinheiten 2A, 2B. Bei den Ausführungseinheiten 2A, 2B kann es sich um beliebige Berechnungseinheiten handeln, beispielsweise um einen vollständigen Mikroprozessor, einen Co-Prozessor, einen digitalen Signalprozessor DSP, eine Gleitpunktberechnungseinheit FPU oder um eine arithmetisch logische Einheit ALU. Die beiden Ausführungseinheiten 2A, 2B des System mit mehreren Ausführungseinheiten 1 sind an eine Umschalteinheit 3 angeschlossen. Darüber hinaus weist das System mit mehreren Ausführungseinheiten einen Interrupt-Controller 4 auf, der über ein Bus-Interface 5 an einen Systembus 6 angeschlossen ist. Der Systembus 6 ist seinerseits über Adress- und Datenleitungen 7A, 7B an die beiden Ausführungseinheiten 2A, 2B angeschlossen. Die Adress- und Datenleitungen 7A, 7B bilden ein Bus-Interface für die Ausführungseinheiten 2A, 2B mit dem Systembus 6. Das System 1 enthält neben der Umschalteinheit 3 eine Vergleichseinheit 8, welche die über die Datenleitungen 7A, 7B von den Ausführungseinheiten 2A, 2B abgegebenen Signale miteinander vergleicht. Das in Figur 1 dargestellte System 1 mit den beiden Ausführungseinheiten 2A, 2B ist zwischen einem Performanz-Betriebsmodus PM, bei dem die Ausführungseinheiten 2A, 2B unterschiedliche Programme ausführen, und einem Vergleichs-Betriebsmodus VM, bei dem die Ausführungseinheiten 2A, 2B das gleiche Programm ausführen, umschaltbar. Im Vergleichs-Betriebsmodus VM vergleicht die Vergleichseinheit 8 die logischen Ausgangssignale der Ausführungseinheiten 2A, 2B. Sobald eine Signalabweichung auftritt, generiert die Vergleichseinheit 8 ein Fehlersignal, das sie über eine Steuerleitung 9 abgibt. Neben den Anwendungsprogrammen führen die Ausführungseinheiten 2A, 2B auch Programme des Betriebssystems BS aus. Ein Teil des Betriebssystems BS wird durch den Scheduler gebildet, der das nächste auszuführende Programm auswählt, und zur Ausführung einem der beiden Cores bzw. Ausführungseinheiten 2A, 2B zuweist. Der Scheduler kann beispielsweise nach Beendigung des Programms durch eine Ausführungseinheit zur Ermittlung des nächsten auszuführenden Programms aufgerufen werden, wobei bei dem erfindungsgemäßen System 1 die übrigen Ausführungseinheiten ebenfalls dazu veranlasst werden, den Scheduler aufzurufen, sofern das durch den zuerst aufgerufenen Scheduler ermittelte Programm in einem Vergleichs-Betriebsmodus VM auszuführen ist. Die Umschalteinheit 3 schaltet die Ausführungseinheiten 2A, 2B von einem Performanz-Betriebsmodus PM in den Vergleichs-Betriebsmodus VM um, wenn das von dem zuletzt aufgerufenen Scheduler ermittelte auszuführende Programm in dem Vergleichs-Betriebsmodus VM auszuführen ist. Dabei wird dieses ermittelte auszuführende Programm als Programm mit der höchsten Priorität durch alle Ausführungseinheiten 2A, 2B nach dem Umschalten des Systems 1 in den Vergleichs-Betriebsmodus VM ausgeführt. Wenn die erste Ausführungseinheit 2A nach Aufrufen des Schedulers als nächstes eine Task auszuführen hat, die in einem Vergleichs-Betriebmodus VM auszuführen ist, signalisiert der Betriebssystem-Scheduler bzw. die Betriebssystem-Scheduler-Instanz, die auf der Ausführungseinheit 2A läuft, an allen Ausführungseinheiten, dass er eine Task bzw. ein Programm im Vergleichs-Betriebsmodus VM starten möchte. Dies veranlasst die übrigen Ausführungseinheiten dazu, ihrerseits den Betriebssystem-Scheduler, bei dem es sich um einen bestimmten Algorithmus handelt, aufzurufen, wobei diejenige Ausführungseinheit, welche zuerst den Scheduler aufgerufen hat, wartet.

Bei dem oben beschriebenen einfachen Beispiel mit vier Tasks T1, T2, T3, T4, wobei T1 die höchste Priorität (Prio 3), T2 die zweithöchste Priorität (Prio 2), T3 die dritthöchste Priorität (Prio 1) und T4 die niedrigste Priorität (Prio 0) aufweist, wobei T1, T2 im Performanz-Betriebsmodus PM auszuführen sind und T3, T4 im Vergleichs-Betriebsmodus VM auszuführen sind, ruft die Ausführungseinheit 2A nach Beendigung der Task T1 den Betriebssystem-Scheduler auf, der die Ausführungseinheit 2B dazu veranlasst, das gerade laufende Programm bzw. die gerade laufende Task T2 zu unterbrechen und seinerseits den Betriebssystem-Scheduler aufzurufen. Wie in Figur 1 dargestellt, überträgt die Ausführungseinheit 2A über eine Leitung 10A ein Umschaltwunschsignal an die Umschalteinheit 3. In gleicher Weise kann die zweite Ausführungseinheit 2B über eine Leitung 10B einen Umschaltwunsch an die Umschalteinheit 3 signalisieren. Die Umschalteinheit 3 legt über Steuerleitungen 11A, 11B bei Bedarf ein Umschaltsignal an die Ausführungseinheiten 2A, 2B an.

Bei der in Figur 1 dargestellten Ausführungsform des erfindungsgemäßen Systems mit mehreren Ausführungseinheiten 1 enthält dieses einen Interrupt-Controller 4. Bei alternativen Ausführungsformen können mehrere Interrupt-Controller 4 vorgesehen sein. Der Interrupt-Controller 4 ist beispielsweise derart programmiert, dass er einen durch Software gesteuerten Interrupt auslösen kann, d. h. einen internen Interrupt. Der Interrupt-Controller 4 gibt die Interrupt-Anforderungen über Leitungen 12A, 12B an die Ausführungseinheiten 2A, 2B separat oder gleichzeitig an beide Prozessoren 2A, 2B ab. Bei einer möglichen Ausführungsform sind die von dem Interrupt-Controller 4 verwalteten Interrupts priorisiert. Dies ist allerdings nicht zwingend erforderlich. Zum Signalisieren eines Moduswechsels in den Vergleichs-Betriebsmodus VM kann in einer möglichen Ausführungsform ein Interrupt mit niedrigster Priorität verwendet werden. Jedem auftretenden Hardware-Interrupt ist eine Interrupt-Service-Routine ISR zugeordnet. Dabei weist die Interrupt-Service-Routine ISR eine Kennung auf, die angibt, ob die Interrupt-Service-Routine ISR in dem Vergleichs-Betriebsmodus VM ausgeführt werden muss oder nicht. Wenn eine Interrupt-Service-Routine ISR nicht in dem Vergleichs-Betriebsmodus VM ausgeführt werden muss und sich die Ausführungseinheiten, in denen die Interrupt-Service-Routine auszuführen ist momentan in einem Vergleichs-Betriebsmodus VM befinden, wird kein Moduswechsel vorgenommen.

Bei einer möglichen Ausführungsform hat eine Interrupt-Routine Vorrang vor der Ausführung eines Anwendungsprogramms. Wenn eine Interrupt-Service-Routine ISR in einem Vergleichs-Betriebsmodus VM abgearbeitet wird, wird der Interrupt-Controller 4 derart programmiert, dass ein Interrupt-Request, den der Interrupt-Controller 4 über die Leitung 5 von dem Systembus 6 erhält, an beide Ausführungseinheiten 2A, 2B über die Leitungen 12A, 12B gesendet wird. In einer Ausführungseinheit bzw. einem Prozessor-Core, die einen Programmcode des Betriebssystems BS ausführt, können auf dieser Ausführungseinheit bzw. Prozessor keine Interrupt-Anfragen bzw. Interrupt-Requests bearbeitet werden. Bei Auftreten eines Hardware-Interrupts werden die folgenden Schritte ausgeführt: Zunächst wird der aktuelle Prozessorzustand einschließlich des Betriebsmodus gesichert bzw. gespeichert. Anschließend wird der Betriebsmodus, in dem die zugehörige Interrupt-Service-Routine ISR auszuführen ist, ermittelt und bei Bedarf eine Umschaltung in den Vergleichs-Betriebsmodus VM vorgenommen. Daraufhin werden alle Interrupts mit höherer Priorität freigegeben. Anschließend wird die Interrupt-Service-Routine ISR ausgeführt und der gesicherte bzw. gespeicherte Prozessorzustand wieder hergestellt. Bei Bedarf erfolgt anschließend wiederum eine Umschaltung in den Performanz-Betriebsmodus PM.

Bei dem erfindungsgemäßen System 1 mit mehreren Ausführungseinheiten gemäß Figur 1 erfolgt das Scheduling einer Task bzw. eines Programms wie folgt: Befindet sich das System 1 mit mehreren Ausführungseinheiten in einem Vergleichs-Betriebsmodus VM, führen alle Ausführungseinheiten 2A, 2B das gleiche Programm bzw. die gleiche Task T gleichzeitig aus. Wird der Scheduler SCH aus irgendeinem Grund für einen Taskwechsel aufgerufen, beispielsweise, wenn eine Ausführungseinheit anzeigt, dass ihr Programm beendet ist, ermittelt der Scheduler SCH, welcher einen Teil des Betriebssystems BS bildet, dasjenige Programm bzw. diejenige Task T mit der höchsten Priorität und schaltet anhand der Programmkennung das System 1 entweder in den Performanz-Betriebsmodus PM oder in den Vergleichs-Betriebsmodus VM.

Befindet sich das System 1 im Performanz-Betriebsmodus PM, existieren mehrere Scheduler-Instanzen, d. h. auf der ersten Ausführungseinheit 2A existiert die Scheduler-Instanz SCH-A und auf der zweiten Ausführungseinheit 2B befindet sich die Scheduler-Instanz SCH-B.

Ermittelt beispielsweise die Scheduler-Instanz SCH-B die nächste Task Tₓ mit der höchsten Priorität und verlangt das ermittelte Programm bzw. die ermittelte Task Tₓ die Ausführung im Vergleichs-Betriebsmodus VM, werden die Scheduling-Datenstrukturen zunächst nicht geändert. Statt dessen wird von der Scheduling-Instanz SCH-A die Priorität des Programms bzw. der Task T_{y} auf Prozessor 2B ermittelt. Hat diese Task T_{y} eine niedrigere Priorität als die nächste Task Tₓ, wird der Ausführungseinheit 2B per Interrupt signalisiert, dass ein Umschaltwunsch besteht. Hat diese Task Ty eine höhere Priorität als die Task Tₓ, aktiviert der Scheduler SCH-A eine so genannte IDLE-Task, die einen Leerlauf-Betriebszustand bildet. Nach der Signalisierung wartet die Scheduling-Instanz SCH-A darauf, dass die Scheduling-Instanz SCH-B fertig ist (Barrier). Wird auf der Ausführungseinheit 2A eine Interrupt-Service-Routine ISR ausgeführt, wird mit der Bearbeitung der Umschaltwunsch-Anfrage erst begonnen, wenn alle Interrupts auf dem Prozessor 2A abgearbeitet sind. Aktiviert die Ausführungseinheit 2A aufgrund des Umschaltwunsches der Scheduler-Instanz SCH-A das Betriebssystem BS, wird auch von der Ausführungseinheit 2A die Scheduler-Instanz SCH-B aufgerufen. Kommt auch die Scheduler-Instanz SCH-B, die auf der Ausführungseinheit 2B läuft, zu dem Ergebnis, dass der Task Tₓ ausgeführt werden muss, löst die Scheduling-Instanz SCH-B die Scheduling-Instanz SCH-A, welche aus der Ausführungseinheit 2A läuft, aus der Sperre bzw. der Barrier.

Kommt die Scheduling-Instanz SCH-B zu dem Ergebnis, dass nicht die Task Tₓ, sondern eine Task T_{z} im Performanz-Betriebsmodus PM ausgeführt werden muss, d. h. die Priorität der Task T_{z} ist größer als die Priorität der Task Tₓ, wird die Scheduling-Instanz SCH-A ebenfalls aus dem Barrier gelöst. Die Scheduling-Instanz SCH-B veranlasst dann die Ausführung der Task T_{z} und die Scheduling-Instanz SCH-A ermittelt erneut eine Task bzw. ein Programm mit der höchsten Priorität (Reschedule).

Kommt die Scheduling-Instanz SCH-B zu dem Ergebnis, dass nicht die Task Tₓ, sondern eine Task T_{z} im Vergleichs-Betriebsmodus VM ausgeführt werden muss, d. h. die Priorität der Task T_{z} ist größer als die Priorität der Task Tₓ, wird die Scheduling-Instanz SCH ebenfalls aus dem Barrier gelöst. Die Scheduling-Instanzen SCH-A, SCH-B veranlassen dann die Ausführung der Task T_{z} auf beiden Ausführungseinheiten.

Bei einer möglichen Ausführungsform kann durch die Scheduling-Instanz SCH-A auch eine betriebsinterne Flagge bzw. ein Flag gesetzt werden. Dieses Flag signalisiert dann den Umschaltwunsch. Arbeitet die Ausführungseinheit 2B gleichzeitig ein Programm des Betriebssystems BS ab, so muss die Scheduling-Instanz SCH-A warten, bis die zweite Ausführungseinheit 2B das Betriebssystem BS verlässt und durch den Interrupt den Umschaltwunsch erhält. Die zweite Ausführungseinheit 2B kann an geeigneter Stelle das Flag abfragen und bei Bedarf den Scheduler SCH-B aufrufen bzw. ein Re-Schedule durchführen, ohne das Betriebssystem BS verlassen zu müssen.

Bei dem erfindungsgemäßen Verfahren für ein Umschalten in den Vergleichs-Betriebsmodus VM wird somit der Scheduler nicht nur durch eine Ausführungseinheit, sondern auch von den übrigen Ausführungseinheiten aufgerufen. Erst wenn das von dem zuletzt aufgerufenen Scheduler SCH ermittelte auszuführende Programm in den Vergleichs-Betriebsmodus VM durchzuführen ist, erfolgt der Umschaltvorgang. Dieses von dem zuletzt aufgerufenen Scheduler ermittelte auszuführende Programm wird als Programm mit der höchsten Priorität dann durch alle Ausführungseinheiten 2 im Vergleichs-Betriebmodus VM des Systems 1 ausgeführt. Diejenige Ausführungseinheit 2, die den Scheduler SCH zuerst zur Ermittlung des als nächstes auszuführendes Programm aufruft, wartet bis alle übrigen Ausführungseinheiten 2 durch den Aufruf des Schedulers ebenfalls ein als nächstes auszuführendes Programm ermittelt haben. Erst dann wird geprüft, ob das von dem zuletzt aufgerufenen Scheduler SCH ermittelte Programm, welches das Programm mit der höchsten Priorität bildet, in dem Vergleichs-Betriebsmodus VM auszuführen ist.

Tritt der Fall auf, dass das von dem zuletzt aufgerufene Scheduler SCH ermittelte Programm nicht in dem Vergleichs-Betriebsmodus VM durchzuführen ist, ruft diejenige Ausführungseinheit 2, welche den Scheduler SCH zuerst aufgerufen hat, den Scheduler erneut auf. Dieser Fall kann auftreten, wenn in dem Zeitraum zwischen dem Aufruf des Schedulers SCH durch die erste Ausführungseinheit 2 und dem Aufruf des Schedulers SCH durch die letzte Ausführungseinheit 2 ein Ereignis aufgetreten ist, welche eine andere Priorisierung der Tasks T erforderlich macht.

Für den Fall, dass der aufgerufene Scheduler SCH ein Programm als nächstes auszuführendes Programm ermittelt, das nicht in einem Vergleichs-Betriebsmodus VM, sondern in einem Performanz-Betriebsmodus PM auszuführen ist, wird das auszuführende Programm bzw. die Task T direkt ohne Umschalten ausgeführt.

Bei einer Ausführungsform des erfindungsgemäßen Verfahrens geht diejenige Ausführungseinheit 2, die den Scheduler SCH zuerst aufgerufen hat, in einen Leerlauf-Betriebsmodus (IDLE) über, bis die übrigen Ausführungseinheiten 2 ihre Programme beendet haben, wenn ein gerade von einer anderen Ausführungseinheit 2 durchgeführtes Programm eine höhere Priorität aufweist, als das durch den zuerst aufgerufenen Scheduler ermittelte, als nächstes auszuführende Programm.

Bei einer Ausführungsform des erfindungsgemäßen Verfahrens veranlasst diejenige Ausführungseinheit 2, die den Scheduler zuerst zur Ermittlung des nächsten auszuführenden Programms aufruft, die anderen Ausführungseinheiten 2 dazu, ebenfalls den Scheduler aufzurufen, indem sie den anderen Ausführungseinheiten ein Aufforderungssignal sendet, wenn das nächste auszuführende Programm in einem Vergleichs-Betriebsmodus VM auszuführen ist. Dieses Aufforderungssignal wird vorzugsweise durch ein Interrupt-Signal gebildet.

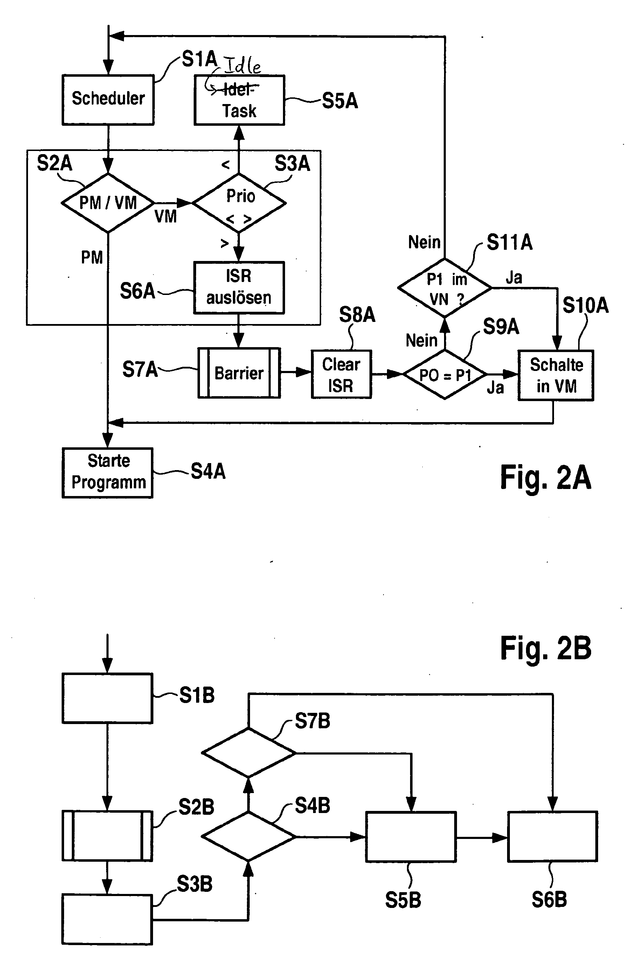

Figur 2A zeigt ein Ablaufdiagramm zur Erläuterung des erfindungsgemäßen Verfahrens. Das in Figur 2A dargestellte Ablaufdiagramm zeigt beispielsweise den Ablauf innerhalb der ersten Ausführungseinheit 2A. Wird beispielsweise durch die Ausführungseinheit 2A ein Programm bzw. eine Task, beispielsweise die Task T1, terminiert, erfolgt ein Aufruf des Schedulers. Nach Abruf des Schedulers SCH im Schritt S1A wird im Schritt S2A ermittelt, ob das nächste Programm bzw. die nächste Task T im Vergleichs-Betriebsmodus VM oder im Performanz-Betriebsmodus PM ausgeführt werden soll. Läuft auf der in dem gegebenen Beispiel zweiten Ausführungseinheit 2B die Task T2 und wird entsprechend der Priorität durch den Scheduler SCH als nächste auszuführende Tasks die Task T3 mit der Priorität 1 selektiert, die in dem Vergleichs-Betriebsmodus VM abzulaufen hat, verzweigt der Ablauf zu Schritt S3A. Ist umgekehrt das nächste auszuführende Programm im Performanz-Betriebsmodus PM auszuführen, kann das Programm direkt im Schritt S4A gestartet werden. Im Schritt S3A wird die Priorität der nächsten auszuführenden Task T3 mit der Priorität desjenigen Programms verglichen, das auf der anderen Ausführungseinheit 2B gerade läuft. In dem gegebenen Beispiel ist dies die Task T2 mit der Priorität Prio 2. Hat das Programm, welches auf der anderen Ausführungseinheit, d. h. auf der Ausführungseinheit 2B läuft, eine höhere Priorität, kann es nicht unterbrochen werden. In diesem Fall geht die Ausführungseinheit 2A im Schritt S5A in einen Leerlauf-Betriebsmodus (IDLE) über. In dem gegebenen Beispiel ist die Priorität der laufenden Task T2 (Prio 2) höher als die Priorität der Task T3 (Prio 1), sodass Schritt S5A ausgeführt wird. Ist umgekehrt die Priorität des Programms auf der anderen Ausführungseinheit 2B niedriger als die Priorität der nächsten Task, wird im Schritt S6A ein Umschaltwunsch per Interrupt von der Ausführungseinheit 2A an die Ausführungseinheit 2B signalisiert. Dabei wird eine Interrupt-Service-Routine ISR ausgelöst. Nach der Signalisierung betritt die erste Ausführungseinheit 2A im Schritt S7A eine so genannte Barrier, in der die Ausführungseinheit 2A auf ein Signal der Ausführungseinheit 2B wartet. Die Barrier ist ein Software-Synchronisations-Datenkonstrukt, bei dem eine Ausführungseinheit bzw. ein CPU wartet, bis die andere Ausführungseinheit den gleichen Programmabarbeitungspunkt erreicht. Nach Auslösung der Interrupt-Service-Routine ISR ruft die zweite Ausführungseinheit 2B ihrerseits den Betriebssystem-Scheduler SCH auf, wobei der in Figur 2B dargestellte Ablauf durchgeführt wird. Hat auch die Ausführungseinheit 2B die Barrier erreicht, wird von beiden Ausführungseinheiten 2A, 2B quasi parallel, allerdings nicht im Vergleichs-Betriebsmodus VM, überprüft, ob beide Ausführungseinheiten 2A, 2B zu dem gleichen Ergebnis gekommen sind, d. h. ob beide Ausführungseinheiten 2A, 2B dasselbe Programm bzw. dieselbe Task als nächstes ausführen wollen. Das Erreichen der Barrier durch die Ausführungseinheit 2A ist in Figur 2 als Schritt S7A dargestellt. Gegebenenfalls wird im Schritt S8A anschließend die Interrupt-Service-Routine ISR gelöscht. Die Überprüfung, ob die beiden Ausführungseinheiten 2A, 2B zu dem gleichen Ergebnis gekommen sind, d. h. dasselbe Programm bzw. dieselbe Task T ausführen wollen, ist im Schritt S9A dargestellt. Werden von beiden Ausführungseinheiten 2A, 2 B nach dem jeweiligen Aufruf des Schedulers SCH dasselbe Programm bzw. dieselbe Task T ermittelt, wird im Schritt S10A das System 1 in den Vergleichs-Betriebsmodus VM geschaltet und anschließend das Programm bzw. die Task im Schritt S4A in beiden Ausführungseinheiten 2A, 2B ausgeführt bzw. gestartet. Ergibt beispielsweise der Ergebnisvergleich S9A, dass auch die zweite Ausführungseinheit 2B nach Aufruf des Schedulers die im Vergleichs-Betriebsmodus VM auszuführende Task T3 ausführen möchte, wird nach Umschalten in den Vergleichs-Betriebsmodus VM im Schritt S10A diese Task T3 im Schritt S4A gestartet. Wird umgekehrt festgestellt, dass die andere Ausführungseinheit 2B ein anderes Ergebnis liefert, wird im Schritt S11A überprüft, ob das von der Ausführungseinheit 2B ausgewählte Programm bzw. die ausgewählte Task T ebenfalls in dem Vergleichs-Betriebsmodus VM ausgeführt werden soll. Ist dies der Fall, wird im Schritt S10A das System 1 in den Vergleichs-Betriebsmodus VM geschaltet und diejenige Task im Schritt S4A gestartet, welche von dem zuletzt aufgerufenen Scheduler SCH ermittelt wird, d. h. die von der Ausführungseinheit 2B ermittelte Task. Wird im Schritt S11A festgestellt, dass die von der Ausführungseinheit 2B ermittelte Task T nicht im Vergleichs-Betriebsmodus VM ausgeführt werden soll, sondern im Performanz-Betriebsmodus PM, ruft die Ausführungseinheit 2A im Schritt S1A erneut den Scheduler SCH auf.

Die Figur 2B zeigt den komplementären Ablauf in der anderen Ausführungseinheit 2B. Nach Auslösen der Interrupt-Service-Routine ISR im Schritt S6A gemäß Figur 2A durch die Ausführungseinheit 2A, ruft die Ausführungseinheit 2B im Schritt S1B gemäß Figur 2B ihrerseits den Scheduler SCH auf. Die Ausführungseinheit 2B betritt die entsprechende Interrupt-Service-Routine ISR. Die Ausführungseinheit 2B startet als erstes den Scheduler SCH im Schritt S1B und betritt anschließend die Barrier im Schritt S2B, sodass auch der Prozessor 2A weiterarbeitet. Gegebenfalls erfolgt ein Löschen des Interrupts im Interrupt-Controller 4 im Schritt S3B. Im Schritt S4B, wie in Figur 2B dargestellt, wird ermittelt, ob sowohl die Ausführungseinheit 2A als auch die Ausführungseinheit 2B dieselbe Task T bzw. dasselbe Programm ermittelt haben. Haben beide Ausführungseinheiten 2A, 2B dieselbe Task T ermittelt, wird im Schritt S5B in den Vergleichs-Betriebsmodus VM umgeschaltet und anschließend die Task T im Schritt S6B ausgeführt. Hat die zweite Ausführungseinheit 2B eine andere Task als die Ausführungseinheit 2A für die Ausführung ermittelt, verzweigt der Vorgang zu Schritt S7B. Ist die von der zweiten Ausführungseinheit 2B auszuführende Task ebenfalls im Vergleichs-Betriebsmodus VM auszuführen, erfolgt im Schritt S5B wiederum ein Umschalten in den Vergleichs-Betriebsmodus VM und die zuletzt ermittelte Task, d. h. die von der Ausführungseinheit 2B ermittelte Task wird im Schritt S6B ausgeführt. Wird im Schritt S7B festgestellt, dass die von der zweiten Ausführungseinheit 2B ermittelte Task T nicht in dem Vergleichs-Betriebsmodus VM ausgeführt werden soll, sondern beispielsweise im Performanz-Betriebsmodus PM, erfolgt kein Umschalten in den Vergleichs-Betriebsmodus VM und diese Task wird im Schritt S6B ausgeführt.

Die in den Figuren 2A, 2B dargestellten Programmabläufe sind komplementär. Betritt beispielsweise die zweite Ausführungseinheit 2A unabhängig von der Signalisierung eines Umschaltwunsches durch die Ausführungseinheit 2A das Betriebssystem BS, führt in diesem Fall die zweite Ausführungseinheit 2B den in Figur 2A dargestellten Ablauf durch und die Ausführungseinheit 2A führt den in Figur 2B dargestellten Ablauf durch.

Das erfindungsgemäße Verfahren verhindert in jedem Fall ein Blockieren der Ausführungseinheiten 2 beim Umschalten in einen Vergleichs-Betriebsmodus VM. Das erfindungsgemäße Verfahren eignet sich insbesondere für Systeme mit zwei oder mehreren Ausführungseinheiten. Weist das System 1 beispielsweise zwei Ausführungseinheiten 2 auf, erfolgt bei dem erfindungsgemäßen Verfahren das Scheduling zweimal, weil die von der zuletzt aufgerufenen Scheduling-Instanz ermittelte Task die aktuell höchste Priorität aufweist und demzufolge ausgeführt wird. Dabei sind die beiden Scheduling-Instanzen aufgrund der im Ablauf enthaltenen Barrier aufeinander synchronisiert.

## Patentansprüche

1. Verfahren zum Umschalten eines Systems mit mehreren Ausführungseinheiten (1), das mindestens zwei Ausführungseinheiten (2) aufweist, von einem Performanz-Betriebsmodus (PM), in welchem die Ausführungseinheiten (2) unterschiedliche Programme ausführen, in einen Vergleichsbetriebsmodus (VM), in welchem die Ausführungseinheiten (2) das gleiche Programm ausführen,
mit den folgenden Schritten:
(a) Aufrufen (S1A) eines Schedulers durch eine Ausführungseinheit (2),
wobei der aufgerufene Scheduler (SCH) das nächste auszuführende Programm der höchsten Priorität ermittelt;
(b) Veranlassen (S6A) der übrigen Ausführungseinheiten (2) dazu, den Scheduler (SCH) ebenfalls aufzurufen, wenn das nächste auszuführende Programm in dem Vergleichsbetriebsmodus (VM) (S2A) auszuführen ist und die Priorität des gerade laufenden Programms auf der wenigstens einen anderen Ausführungseinheit (2) niedriger ist als das nächste auszuführende Programm (S3A);
(c) Umschalten (S10A) des Systems mit mehreren Ausführungseinheiten (1) von dem Performanz-Betriebsmodus (PM) in den Vergleichsbetriebsmodus (VM), wenn das von dem zuletzt aufgerufenen Scheduler (SCH) ermittelte auszuführende Programm in dem Vergleichsbetriebsmodus (VM) (S11A) auszuführen ist, wobei dieses von dem zuletzt aufgerufenen Scheduler (SCH) ermittelte auszuführende Programm als Programm der höchsten Priorität durch alle Ausführungseinheiten (2) in dem Vergleichsbetriebsmodus (VM) des Systems mit mehreren Ausführungseinheiten (1) ausgeführt wird.

2. Verfahren nach Anspruch 1,
wobei diejenige Ausführungseinheit (2), die den Scheduler (SCH) zuerst zur Ermittlung des als nächstes auszuführenden Programms aufruft, wartet (S7A) bis alle übrigen Ausführungseinheiten (2) durch den Aufruf des Schedulers (SCH) ebenfalls ein als nächstes auszuführendes Programm ermittelt haben und erst dann geprüft (S9A) wird, ob das von dem zuletzt aufgerufenen Scheduler (SCH) ermittelte Programm, welches das Programm mit der höchsten Priorität bildet, in dem Vergleichsbetriebsmodus (VM) auszuführen ist.

3. Verfahren nach Anspruch 2,
wobei, wenn ermittelt wird (S11A), dass das von dem zuletzt aufgerufenen Scheduler (SCH) ermittelte Programm nicht in dem Vergleichsbetriebsmodus (VM) durchzuführen ist, diejenige Ausführungseinheit (2), welche den Scheduler (SCH) zuerst aufgerufen hat, den Scheduler (SCH) erneut aufruft (S1A).

4. Verfahren nach Anspruch 3,
wobei, wenn der aufgerufene Scheduler (SCH) ein Programm als nächstes auszuführendes Programm ermittelt (S2A), das nicht in einem Vergleichsbetriebsmodus (VM), sondern in einem Performanz-Betriebsmodus (PM) auszuführen ist, dieses auszuführende Programm direkt ohne Umschalten ausgeführt (S4A) wird.

5. Verfahren nach Anspruch 1,
wobei eine Ausführungseinheit (2), die den Scheduler (SCH) zur Ermittlung des nächsten auszuführenden Programms aufruft (S1A), die Priorität des ermittelten Programms mit den Prioritäten aller gerade auf den anderen Ausführungseinheiten (2) ausgeführten Programmen vergleicht (S3A), falls das ermittelte Programm in einem Vergleichsbetriebsmodus (VM) auszuführen ist.

6. Verfahren nach Anspruch 5,
wobei, wenn ein gerade auf einer anderen Ausführungseinheit (2) durchgeführtes Programm eine höhere Priorität aufweist als das durch den zuerst aufgerufenen Scheduler (SCH) ermittelte, als nächstes auszuführende Programm diejenige Ausführungseinheit (2), die den Scheduler (SCH) zuerst aufgerufen hat, in einen Leerlauf-Betriebsmodus (IDLE) übergeht (S5A) und wartet bis die übrigen Ausführungseinheiten (2) ihre Programme jeweils beendet haben.

7. Verfahren nach Anspruch 6,
wobei diejenige Ausführungseinheit (2), die den Scheduler (SCH) zuerst zur Ermittlung des nächsten auszuführenden Programms aufruft, die anderen Ausführungseinheiten (2) dazu veranlasst, ebenfalls den Scheduler aufzurufen, indem sie den anderen Ausführungseinheiten ein Aufforderungssignal sendet (S6A), wenn das nächste auszuführende Programm in einem Vergleichsbetriebsmodus (VM) auszuführen ist.

8. Verfahren nach Anspruch 7,
wobei das Aufforderungssignal durch ein Interrupt-Signal gebildet wird.

9. Verfahren nach Anspruch 1,
wobei die Ausführungseinheiten (2) jeweils durch einen Prozessor, einen Co-Prozessor, eine Gleitpunktberechnungseinheit (FPU), eine arithmetisch logische Einheit (ALU) oder durch einen digitalen Signalprozessor (DSP) gebildet werden.

10. Verfahren nach Anspruch 1,
wobei eine Ausführungseinheit (2) nach Beendigung eines ausgeführten Programms den Scheduler (SCH) aufruft.

11. System (1) mit mindestens zwei Ausführungseinheiten (2), das zwischen einem Performanz-Betriebsmodus (PM), bei dem die Ausführungseinheiten (2) unterschiedliche Programme ausführen, und einem Vergleichsbetriebsmodus (VM),
bei dem die Ausführungseinheiten (2) das gleiche Programm ausführen, umschaltbar ist, mit
einem Scheduler (SCH), der durch eine Ausführungseinheit (2) zur Ermittlung des nächsten auszuführenden Programms der höchsten Priorität aufgerufen wird,
wobei die übrigen Ausführungseinheiten (2) dazu veranlasst werden, ebenfalls den Scheduler (SCH) aufzurufen, wenn das durch den zuerst aufgerufenen Scheduler (SCH) ermittelte nächste auszuführende Programm in dem Vergleichsbetriebsmodus gerade laufenden (VM) (S2A) auszuführen ist und die Priorität des Programms auf der wenigstens einen anderen Ausführungseinheit (2) niedriger ist als das nächste auszuführende Programm (S3A); mit
einer Umschalteinheit (3), die das System (1) von dem Performanz-Betriebsmodus (PM) in den Vergleichsbetriebsmodus (VM) umschaltet, wenn das von dem zuletzt aufgerufenen Scheduler (SCH) ermittelte auszuführende Programm in dem Vergleichsbetriebsmodus (VM) (S11A) auszuführen ist, wobei dieses ermittelte auszuführende Programm als Programm der höchsten Priorität durch alle Ausführungseinheiten (2) nach dem Umschalten des Systems (1) in dem Vergleichsbetriebsmodus (VM) ausgeführt wird.

## Claims

1. Method for changing over a system (1) having a plurality of execution units, which has at least two execution units (2), from a performance operating mode (PM), in which the execution units (2) execute different programs, to a comparison operating mode (VM), in which the execution units (2) execute the same program,
having the following steps:
(a) an execution unit (2) calls (S1A) a scheduler, wherein the called scheduler (SCH) determines the next program to be executed with the highest priority;
(b) the remaining execution units (2) are caused (S6A) to likewise call the scheduler (SCH) if the next program to be executed is to be executed in the comparison operating mode (VM) (S2A) and the priority of the program currently running on the at least one other execution unit (2) is lower than the next program to be executed (S3A);
(c) the system (1) having a plurality of execution units is changed over (S10A) from the performance operating mode (PM) to the comparison operating mode (VM) if the program to be executed, which is determined by the scheduler (SCH) called last, is to be executed in the comparison operating mode (VM) (S11A), wherein this program to be executed, which is determined by the scheduler (SCH) called last, is executed, as the program with the highest priority, by all execution units (2) in the comparison operating mode (VM) of the system (1) having a plurality of execution units.

2. Method according to Claim 1,
wherein that execution unit (2) which first calls the scheduler (SCH) in order to determine the program to be executed next waits (S7A) until all remaining execution units (2) have likewise determined a program to be executed next by calling the scheduler (SCH), and only then is a check carried out (S9A) in order to determine whether the program which is determined by the scheduler (SCH) called last and forms the program with the highest priority is to be executed in the comparison operating mode (VM).

3. Method according to Claim 2,
wherein, if it is determined (S11A) that the program determined by the scheduler (SCH) called last is not to be executed in the comparison operating mode (VM), that execution unit (2) which first called the scheduler (SCH) calls (S1A) the scheduler (SCH) again.

4. Method according to Claim 3,
wherein, if the called scheduler (SCH) determines (S2A), as the next program to be executed, a program which is to be executed in a performance operating mode (PM) rather than in a comparison operating mode (VM), this program to be executed is executed (S4A) directly without changeover.

5. Method according to Claim 1,
wherein an execution unit (2) which calls (S1A) the scheduler (SCH) in order to determine the next program to be executed compares (S3A) the priority of the determined program with the priorities of all programs currently being executed on the other execution units (2) if the determined program is to be executed in a comparison operating mode (VM) .

6. Method according to Claim 5,
wherein, if a program currently being executed on another execution unit (2) has a higher priority than the program to be executed next, which is determined by the scheduler (SCH) called first, that execution unit (2) which first called the scheduler (SCH) changes (SSA) to an idling operating mode (IDLE) and waits until the remaining execution units (2) have each ended their programs.

7. Method according to Claim 6,
wherein that execution unit (2) which first calls the scheduler (SCH) in order to determine the next program to be executed causes the other execution units (2) to likewise call the scheduler by sending (S6A) a request signal to the other execution units if the next program to be executed is to be executed in a comparison operating mode (VM) .

8. Method according to Claim 7,
wherein the request signal is formed by an interrupt signal.

9. Method according to Claim 1,
wherein the execution units (2) are each formed by a processor, a coprocessor, a floating point calculation unit (FPU), an arithmetic logic unit (ALU) or a digital signal processor (DSP).

10. Method according to Claim 1,
wherein an execution unit (2) calls the scheduler (SCH) after a program being executed has been ended.

11. System (1) having at least two execution units (2), which system can be changed over between a performance operating mode (PM), in which the execution units (2) execute different programs, and a comparison operating mode (VM), in which the execution units (2) execute the same program, having
a scheduler (SCH) which is called by an execution unit (2) in order to determine the next program to be executed with the highest priority,
wherein the remaining execution units (2) are caused to likewise call the scheduler (SCH) if the next program to be executed, which is determined by the scheduler (SCH) called first, is to be executed in the comparison operating mode (VM) (S2A) and the priority of the program currently running on the at least one other execution unit (2) is lower than the next program to be executed (S3A); having
a changeover unit (3) which changes over the system (1) from the performance operating mode (PM) to the comparison operating mode (VM) if the program to be executed, which is determined by the scheduler (SCH) called last, is to be executed in the comparison operating mode (VM) (S11A), wherein this determined program to be executed is executed, as the program with the highest priority, by all execution units (2) after the system (1) has been changed over to the comparison operating mode (VM).

## Revendications

1. Procédé pour permuter un système comprenant plusieurs unités d'exécution (1), lequel présente au moins deux unités d'exécution (2), entre un mode de fonctionnement performant (PM), dans lequel les unités d'exécution (2) exécutent des programmes différents, et un mode de fonctionnement comparatif (VM), dans lequel les unités d'exécution (2) exécutent le même programme, comprenant les étapes suivantes :
(a) invocation (S1A) d'un ordonnanceur par une unité d'exécution (2), l'ordonnanceur (SCH) invoqué déterminant le prochain programme à exécuter ayant la priorité la plus élevée ;
(b) incitation (S6A) de l'invocation de l'ordonnanceur (SCH) également par les autres unités d'exécution (2) si le prochain programme à exécuter doit être exécuté dans le mode de fonctionnement comparatif (VM) (S2A) et si la priorité du programme actuellement en cours d'exécution sur l'au moins une autre unité d'exécution (2) est inférieure à celle du prochain programme à exécuter (S3A) ;
(c) permutation (S10A) du système comprenant plusieurs unités d'exécution (1) du mode de fonctionnement performant (PM) au mode de fonctionnement comparatif (VM) si le programme à exécuter déterminé par le dernier ordonnanceur (SCH) invoqué doit être exécuté dans le mode de fonctionnement comparatif (VM) (S11A), ce programme à exécuter déterminé par le dernier ordonnanceur (SCH) invoqué étant exécuté en tant que programme ayant la priorité la plus élevée par toutes les unités d'exécution (2) dans le mode de fonctionnement comparatif (VM) du système comprenant plusieurs unités d'exécution (1).

2. Procédé selon la revendication 1, selon lequel l'unité d'exécution (2) qui invoque en premier l'ordonnanceur (SCH) en vue de déterminer le prochain programme à exécuter attend (S7A) jusqu'à ce que toutes les autres unités d'exécution (2) aient également déterminé un prochain programme à exécuter par l'invocation de l'ordonnanceur (SCH) et après seulement un contrôle est effectué (S9A) pour vérifier si le programme déterminé par le dernier ordonnanceur (SCH) invoqué, lequel représente le programme ayant la priorité la plus élevée, doit être exécuté dans le mode de fonctionnement comparatif (VM).

3. Procédé selon la revendication 2, selon lequel, s'il est déterminé (S11A) que le programme déterminé par le dernier ordonnanceur (SCH) invoqué ne doit pas être exécuté dans le mode de fonctionnement comparatif (VM), l'unité d'exécution (2) qui a invoqué en premier l'ordonnanceur (SCH) invoque de nouveau (S1A) l'ordonnanceur (SCH).

4. Procédé selon la revendication 3, selon lequel, si l'ordonnanceur (SCH) invoqué détermine (S2A) comme prochain programme à exécuter un programme qui doit être exécuté non pas dans un mode de fonctionnement comparatif (VM), mais dans un mode de fonctionnement performant (PM), ce programme à exécuter est alors exécuté (S4A) directement sans permutation.

5. Procédé selon la revendication 1, selon lequel une unité d'exécution (2) qui invoque (S1A) l'ordonnanceur (SCH) en vue de déterminer le prochain programme à exécuter compare (S3A) la priorité du programme déterminé avec les priorités de tous les programmes actuellement exécutés sur les autres unités d'exécution (2) si le programme déterminé doit être exécuté dans un mode de fonctionnement comparatif (VM).

6. Procédé selon la revendication 5, selon lequel, lorsqu'un programme actuellement exécuté sur une autre unité d'exécution (2) présente une priorité supérieure à celle du prochain programme à exécuter déterminé par le dernier ordonnanceur (SCH) invoqué, l'unité d'exécution (2) qui a invoqué en premier l'ordonnanceur (SCH) passe (S5A) dans un mode de fonctionnement de veille (IDLE) et attend jusqu'à ce que les autres unités d'exécution (2) aient terminé leurs programmes respectifs.

7. Procédé selon la revendication 6, selon lequel l'unité d'exécution (2) qui invoque en premier l'ordonnanceur (SCH) en vue de déterminer le prochain programme à exécuter incite les autres unités d'exécution (2) à invoquer également l'ordonnanceur par le fait qu'elle envoie (S6A) aux autres unités d'exécution un signal de demande lorsque le prochain programme à exécuter doit être exécuté dans un mode de fonctionnement comparatif (VM).

8. Procédé selon la revendication 7, selon lequel le signal de demande est formé par un signal d'interruption.

9. Procédé selon la revendication 1, selon lequel les unités d'exécution (2) sont respectivement formées par un processeur, un coprocesseur, une unité de calcul à virgule flottante (FPU), une unité logique arithmétique (ALU) ou par un processeur de signal numérique (DSP).

10. Procédé selon la revendication 1, selon lequel une unité d'exécution (2) invoque l'ordonnanceur (SCH) après avoir terminé un programme exécuté.

11. Système (1) comprenant au moins deux unités d'exécution (2), lequel peut être permuté entre un mode de fonctionnement performant (PM), dans lequel les unités d'exécution (2) exécutent des programmes différents, et un mode de fonctionnement comparatif (VM), dans lequel les unités d'exécution (2) exécutent le même programme, comprenant :
un ordonnanceur (SCH) qui est invoqué par une unité d'exécution (2) pour déterminer le prochain programme à exécuter ayant la priorité la plus élevée ;
les autres unités d'exécution (2) étant incitées à invoquer également l'ordonnanceur (SCH) si le prochain programme à exécuter déterminé par le premier ordonnanceur (SCH) invoqué doit être exécuté dans le mode de fonctionnement comparatif (VM) (S2A) et si la priorité du programme actuellement en cours d'exécution sur l'au moins une autre unité d'exécution (2) est inférieure à celle du prochain programme à exécuter (S3A) ; comprenant
une unité de permutation (3) qui permute le système (1) du mode de fonctionnement performant (PM) au mode de fonctionnement comparatif (VM) si le programme à exécuter déterminé par le dernier ordonnanceur (SCH) invoqué doit être exécuté dans le mode de fonctionnement comparatif (VM) (S11A), ce programme à exécuter déterminé étant exécuté en tant que programme ayant la priorité la plus élevée par toutes les unités d'exécution (2) après la permutation du système (1) dans le mode de fonctionnement comparatif (VM).
